# EUROPEAN PATENT SPECIFICATION

(11) **EP 4 165 230 B1**
(45) Date of publication and mention of the grant of the patent: **22.04.2026**
(21) Application number: 21728598.0
(22) Date of filing: 04.06.2021
(51) Int. Cl.: C09D 139/06, C23G 1/24, C23G 1/26, C23C 22/83, C23C 22/18, C23C 22/73

(54) **PHOSPHONATE-FREE, AQUEOUS PICKLING COMPOSITIONS AND THEIR USE**
PHOSPHONATFREIE, WÄSSRIGE BEIZZUSAMMENSETZUNGEN UND DEREN VERWENDUNG
COMPOSITIONS DE DÉCAPAGE AQUEUSES SANS PHOSPHONATE ET LEUR UTILISATION

(30) Priority: 10.06.2020 EP 20179331
(43) Date of publication of application: 19.04.2023
(73) Proprietor: Chemetall GmbH, 60487 Frankfurt (DE)
(72) Inventor: MOHR, Anna, Verena, 60487 Frankfurt am Main (DE); SIX, Marcell, 60487 Frankfurt am Main (DE); KHELFALLAH, Nawel, Souad, 60487 Frankfurt am Main (DE)
(74) Representative: Coatings IP Association
(86) International application number: PCT/EP2021/064967
(87) International publication number: WO 2021/249879

(56) References cited:
- EP-A1- 0 982 394
- WO-A1-2012/100146
- WO-A1-2014/186286
- WO-A1-2019/152556
- US-A- 4 150 115
- US-A1- 2011 100 824

## Description

The present invention relates to a phosphonate-free, aqueous, neutral pickling composition for removal of rust and scale in a method for pickling metallic substrates and a concentrate to produce such compositions. The present invention further relates to such method and the use of the compositions for pickling metallic surfaces. Furthermore, the invention relates to a method for coating metallic substrates, particularly to improve corrosion protection.

### BACKGROUND

The non-removal of oxide layers and other residuals after thermal treatment of metallic substrates typically raises problems in subsequent conversion coating steps, resulting in a reduced adhesion of subsequent coating layers, particularly coating layers obtained by cathodic electro deposition coating, thus reducing corrosion protection.

Therefore, generally, and particularly in the automotive industry, aqueous cleaning and pickling solutions having rather extreme pH values are used prior to conversion coating. A problem typically associated with highly acidic pickling solutions is that after rinsing the surface there is a tendency of film rust formation. Furthermore, when using highly acidic or highly alkaline compositions, stricter requirements for occupational and industrial safety and safety in transportation must be observed. Moreover, such pickling compositions are more aggressive towards the metallic substrates to be pickled and the equipment.

To overcome such problems, in recent years an increasing number of fluidic, neutral rust and scale removing compositions suitable for iron-based and non-iron metals and alloys, and being applicable in dip methods, flooding methods and spraying methods have been developed. They are suitable to remove oxide layers from metallic surfaces as they occur after thermal deburring, laser cutting and welding operations. Such neutral pickling compositions have many advantages compared to mineral acid based pickling compositions or strong alkaline compositions. Contrary to strong acids and bases, their handling is much easier and it is often possible to clean and pickle the surfaces in one process step. Therefore, an additional cleaning step can often be omitted.

Particularly, neutral compositions based on phosphonic acids such as 1-hydroxyethane-1,1-diphosphonic acid or amino phosphonic acids are used for the above purposes, because they are known to be complexing agents even in an essentially neutral environment. The term "neutral", as used herein, refers to aqueous compositions having a pH value at 55 °C of about 5 to about 9 and thus encompasses slightly acidic as well as slightly alkaline aqueous compositions.

On the other hand, phosphonates are typically not the first choice, when it comes to cleaning and pickling metallic surfaces of different metal composition. This particularly plays a role, when metallic substrates of different composition are to be cleaned and pickled with the same cleaning and pickling composition one after each other or at the same time, in case of pickling pre-assembled metallic components of different metallic composition, such as particularly steel and galvanized steel. This is because phosphonate-based cleaning and pickling solutions often lack a balanced pickling weight loss for different substrates, and have a significantly different effectiveness on the surfaces to be cleaned and pickled, depending on the type of metal or alloy.

Furthermore, phosphonates and other complexing agents have come under criticism because of ecological concerns and problems in wastewater treatment. Moreover, in some cases, for example due to insufficient rinsing after pickling treatment, there is a likelihood to carry over these substances into subsequent conversion coating bathes, where they interfere with those bathes, leading to insufficient conversion coating and thus insufficient corrosion protection and adhesion of subsequent coating layers.

WO 2019/152556 A1 and WO 2014/186286 A1 describes each cleaning or pickling compositions used for pretreatment of metallic substrates before applying a conversion coating thereon.

WO 2012/100146 A1 describes a method for removing rust from a ferrous metal-containing surface with a pickling solution having a pH of no more than 6.0.

EP 0982394 A1 describes neutral to alkaline aqueous compositions for cleaning metallic surfaces, the compositions comprising a nonionic surfactant, a homo or copolymer of vinylpyrrolidone and a polysaccharide polymer.

Consequently, there is a continuing need for improved aqueous, neutral and particularly phosphonate-free pickling compositions providing an improved, particularly balanced pickling behavior when used on different substrates and which do not adversely affect subsequent conversion coating processes. Particularly, the adhesion of subsequent coating layers such as electrodeposition coating layers, filler, basecoat and/or clear coat layers should not be deteriorated.

### SUMMARY

This need was met by providing an aqueous phosphonate-free pickling composition having a pH value at 55 °C in the range from 5 to 9, containing at least one copolymer, which is water-soluble or water-dispersible and selected from the group consisting of polyvinylpyrrolidones; the content of water being in the range from 95.0 wt.-% to 99.9 wt.-%, based on the total weight of the composition, wherein the polyvinylpyrrolidone is a random polymer polymerized from a mixture of vinyl pyrrolidone and vinyl acetate or a random polymer polymerized from a mixture of vinyl pyrrolidone and vinyl acetate and a further monoethylenically unsaturated monomer, wherein the molar ratio of vinyl acetate to vinyl pyrrolidone is from 30:70 to 70:30, wherein the polyvinylpyrrolidone has a weight average molecular weight from 15,000 to 100,000 g/mol (determined by gel permeation chromatography).

In the following such composition is called "composition according to the invention" or "pickling composition according to the invention".

The present invention further provides a concentrate containing the ingredients of the composition according to the invention in a higher concentration, which allows the preparation of the composition according to the invention at the place, where it is needed, by dilution with a diluent comprising water and optionally organic solvents and, if necessary, by subsequently adjusting the pH value.

The invention further provides a method for pickling a metallic substrate comprising at least one step of contacting a metallic substrate with a composition according to the invention.

In the following, this method is called "pickling method according to the invention".

Yet another object of the present invention is a method for coating a metallic substrate comprising at least
(a) the pickling method according to the invention, followed by
(b) a step of coating the thus pickled metallic substrate with a conversion coating composition, optionally followed by
(c) a step of applying an electrodeposition coating composition; and optionally followed by
(d) one or more steps of applying one or more further coating composition(s).

In the following, this method is called "coating method according to the invention".

A further object of the present invention is the use of the compositions according to the invention for pickling metallic substrates.

In the following, this use is called "use according to the invention".

### DETAILED DESCRIPTION

### Composition according to the invention

Since the composition according to the present invention is an aqueous composition, the main ingredient is water. The content of water, based on the total weight of the composition ranges from 95 wt.-% to 99.9 wt.-%, more preferred 97 wt.-% to 99.8 wt.-%, even more preferred 98 wt.-% to 99.8 wt.-% and most preferred 99 to 99.7wt.-%.

The composition according to the present invention may also contain minor amounts of one or more organic solvents which are preferably miscible with or dissolve in water. Preferably their amount is 4 wt.-% or less, more preferred less than 3 wt.-% and even more preferred less than 2 wt.-% or less than 1 wt.-%, based on the total weight of the composition according to the present invention. Most preferred the only solvent used in the composition according to the present invention is water.

The compositions according to the invention are preferably aqueous solutions or aqueous dispersions, most preferred aqueous solutions.

Compositions according to the invention generally provide a more balanced pickling, when used for pickling different metallic substrates. The extend of pickling can be compared between different substrates by the determination of the pickling weight loss. The pickling weight loss is the loss of material in g/m² in the pickling process. The amount should neither be too low, indicating an insufficient pickling nor too high, indicating a surface treatment being too harsh, thus increasing the risk of damaging the surface of the substrate, leading to an uneven surface and thus causing an inferior adhesion of subsequent coating layers.

A sufficient pickling weight loss starts preferably at about 0.5 g/m² and should preferably not exceed about 2.5 g/m², whereby exceptions from this range might be acceptable depending on the desired application. A balanced pickling is typically obtained, when the difference in pickling weight loss (Δpwl), comparing different metallic substrates pickled with the same pickling composition, is preferably not larger than about 0.6 g/m², even more preferred not larger than 0.4 g/m² and most preferred not larger than 0.3 or 0.2 g/m². The pickling weight loss, particularly the afore-mentioned values and the (Δpwl) are determined as described in the experimental part of the application. The pickling weight loss values and Δpwl values as mentioned above, preferably apply to CRS (cold rolled steel) and HDG (hot dip galvanized steel) and the comparison of both. However, the pickling compositions according to the invention are also suitable for other substrates.

### Water-Soluble or Water-Dispersible Copolymers

The term "copolymer" as used herein refers to polymers composed of at least two different monomers, preferably two different monomers or three different monomers (terpolymers).

### Polyvinylpyrrolidones

The polyvinylprrolidone copolymers are vinyl acetate-vinyl pyrrolidone copolymers. Particularly, the polyvinylpyrrolidone is preferably polymerized from a mixture of vinyl pyrrolidone and vinyl acetate and optionally a further monoethylenically unsaturated monomer.

Such vinyl acetate-vinyl pyrrolidone copolymers are random copolymers and possess a molar ratio of vinyl acetate to vinyl pyrrolidone from 30:70 to 70:30, more preferred 30:70 to 60:40 and even more preferred from 30:70 to 50:50, such as 40:60.

Typically, these copolymers are prepared by free radical polymerization. Since the monomers employed in their synthesis carry just one polymerizable group the copolymers are linear copolymers.

The weight average molecular weight M_{w} of the copolymers, determined by gel permeation chromatography (GPC) is in the range from 15,000 to 100,000, more preferred 20,000 to 90,000, even more preferred 30,000 to 80,000, such as 50,000 to 70,000 g/mol. GPC can be carried out according to DIN 55672-3:2016-03. The polydispersity of the copolymers M_{w}/Mₙ is preferably in the range from 3 to 7, more preferred 4 to 6.

It is also possible to use copolymers, which only differ from the afore-mentioned vinyl acetate-vinyl pyrrolidone copolymers in that preferably 0 to 10 mol-%, more preferred 1 to 8 mol-% and most preferred 1 to 5 mol-% of the combined amount vinyl acetate and vinyl pyrrolidone are replaced by a third monoethylenically unsaturated monomer selected from vinyl monomers, acrylate monomers and methacrylate monomers. The above weight average molecular weight ranges also apply to these copolymers.

### pH Value

The aqueous compositions according to the present invention have a pH value (determined at 55 °C) in the range from 5 to 9, preferably 5.5 to 8.5, more preferred from 6.0 to 8.0 and most preferred from 6.5 to 7.5.

### Amounts of Polyvinylpyrrolidones

The compositions according to the invention need to contain at least one water-soluble or water-dispersible copolymers selected from the group consisting of polyvinylpyrrolidones.

The amount of all polyvinylryrrolidones as defined for use in the composition according to the invention preferably ranges from 0.05 to 2.0 wt.-%, more preferred 0.10 to 1.5 wt.-%, even more preferred 0.15 to 1.0 wt.-% and most preferred 0.2 to 0.8 wt.-% such as 0.3 to 0.7 wt.-%, based on the total weight of the composition according to the invention.

All wt.-% ranges used in the context of the total specification do not only apply to the broadest definition of the respective ingredient(s), but also to any further preferred embodiment of the ingredient(s).

### Further ingredients

The compositions of the present invention may also contain further ingredients such as additives, such ingredients being necessarily different from polyvinylpyrrolidones as defined for use in the composition according to the present invention. The further ingredients also differ from water and organic solvents.

If present, such additives typically not interfere with the pickling effect provided by the compositions of the present invention, but add further properties such as an enhanced shelf-life, e.g. obtained by adding preservatives; or an integrated cleaning or degreasing effect e.g. obtained by adding surfactants, preferably non-ionic surfactants.

Unlike household cleaning compositions, such as detergents, particularly laundry detergents, the compositions according to the present invention do not contain proteases, preferably no enzymes at all, because pickling action clearly differs from enzymatic cleavage reaction such as cleavage of protein-based dirt and/or contaminations.

Preferably, the total amount of further ingredients, which differ from the polyvinylpyrrolidones as defined for use in the composition according to the present invention, is less than 50 wt.-%, more preferred less than 40 wt.-%, even more preferred less than 30 wt.-% or less than 20 wt.-%, such as less than 10 wt.-% of the combined amount of ingredients consisting of the further ingredients and the polyvinylpyrrolidones for use in the composition according to the present invention.

Preferably, the compositions according to the invention do not contain polymers or metal ion chelating agents other than the polyvinylpyrrolidones employed in the composition according to the present invention.

### Concentrate According to the Invention

The present invention further relates to a concentrate comprising a liquid medium composed of water and/or organic solvents; the water-soluble or water-dispersible copolymer as defined in claim 1; and any further ingredients of the composition as defined in any one of claims 1 to 7, wherein the sum of the amount of water-soluble or water-dispersible as defined in claim 1 and the further ingredients, if contained, range from 10 wt.-% to 90 wt.-%, preferably 20 wt.-% to 90 wt.-% or 30 wt-% to 90 wt.-% and most preferred 40 wt.-% to 90 wt.-% such as 50 wt.-% to 90 wt.-%, based on the total weight of the concentrate.

The concentrates according to the invention most preferably do not contain proteases and are preferably enzyme-free.

The concentrate allows the preparation of the composition according to the present invention where it is needed, by diluting with a diluent comprising water and optionally organic solvents and, if necessary, followed by subsequently adjusting the pH value at 55 °C in the range from 5 to 9, preferably 5.5 to 8.5, more preferred from 6.0 to 8.0 and most preferred from 6.5 to 7.5. The concentrate is preferably an aqueous concentrate.

Preferably, the dilution ratio (volume of the concentrate : volume of the diluent) is from 1:1 to 1:50, more preferred 1:5 to 1:50 and most preferred 1:10 to 1:50.

Using such concentrates reduces the need of large storage capacities and facilitates transportation to the places of use.

### Pickling Method According to the Invention

The pickling method according to the present invention includes at least one step of contacting a metallic substrate with a composition according to the present invention.

### Metallic Substrate

The term "metallic substrate" as used herein includes substrates of any shape, such as flat metallic substrates like simple panels or coils, but also metallic substrates with complex shapes like automotive bodies or parts thereof. The term "metallic" as used herein comprises pure metals and metal alloys. Particularly preferred examples of metals and alloys are cold-rolled steel, galvanized steel such as hot-dip galvanized steel or electrolytically galvanized steel and aluminum and its alloys. Particularly preferred substrates are cold-rolled steel and galvanized steel, such as hot-dip galvanized steel. Moreover, the term "substrate" also comprises pre-assembled metal parts, the metal parts being of the same metal or alloy or the metal parts being of at least two different metals or alloys (multi-metal capability of the method).

### Contacting the Metallic Substrate with a Composition according to the Invention

The step of contacting a metallic substrate with a composition according to the invention is preferably a step selected from the steps of
(a) dipping a metallic substrate into a composition according to the invention,
(b) flooding a metallic substrate with a composition according to the invention; and
(c) spraying a metallic substrate with a composition according to the invention.

While contacting the metallic substrate the substrate can be moved through or rotated in the composition and/or the composition can be agitated, e.g. by stirring and the like.

The metallic substrate is preferably contacted with the composition according to the invention for period ranging from 1 to 15 min, more preferred a period ranging from 3 to 12 min and most preferred a period ranging from 5 to 10 min.

The temperature of the composition according to the invention during the step of contacting the metallic substrate preferably ranges from 20 to 70 °C, more preferred 30 to 65 °C and most preferred 40 to 60 °C such as 50 to 60 °C.

Taking into account the maintenance of the temperature of the composition according to the invention in the above ranges and optimizing the contact area of the substrate during contacting, it is most preferred to contact the metallic substrate by dipping the metallic substrate into the composition according to the invention.

### Optional further Steps of the Pickling Method According to the Invention

The pickling method according to the invention can comprise one or more steps *prior* to the at least one step of contacting a metallic substrate with a composition according to the present invention.

It is to be emphasized that the optional further steps described in the following are not necessarily the only optional steps possible in the pickling method according the invention. Particularly any further cleaning, rinsing and/or drying step may be carried out in addition to the preferred optional steps, if desired.

Particularly, the pickling method may comprise, prior to the at least one step of contacting a metallic substrate with a composition according to the present invention (iv), at least one cleaning step (i) preferably followed by at least one rinsing step (ii), even more preferred followed by two rinsing steps (ii) and (iii).

Therefore, a preferred pickling method according to the present invention comprises
(i) a step of contacting a metallic substrate with a cleaning composition, optionally followed by
(ii) a step of rinsing the metallic substrate with a first rinsing composition, optionally followed by
(iii) a step of rinsing the metallic substrate with a second rinsing composition, followed by
(iv) a step of contacting a metallic substrate with a composition according to the present invention.

Step (i) of contacting the metallic substrate with a cleaning composition can be carried out in the same manner as the step of contacting the metallic substrate with a composition according to the present invention except for using the cleaning composition instead of the composition according to the present invention. Most preferred are spray cleaning and/or dip cleaning. The temperature of the cleaning composition used in step (i) is preferably in the range from 20 to 70 °C, more preferred 30 to 65 °C and most preferred 40 to 60 °C such as 45 to 60 °C. The duration of contacting the metallic substrate with the cleaning composition preferably ranges from 0.5 min to 15 min, more preferred 1 min to 10 min, most preferred 3 min to 5 min.

The cleaning composition preferably has an alkaline pH value in the range from 8 to 12, more preferred 9 to 11, such as 10 to 11 and preferably contains at least one of caustic, phosphonates, surfactants and complexing agents.

Suitable cleaning agents are for example commercially available from Chemetall GmbH (Frankfurt, Germany) under the tradename Gardoclean^{®}.

The rinsing steps (ii) and (iii) are preferably carried out by spray or dip applying, preferably dip applying the respective rinsing compositions. The rinsing compositions are typically water or water containing diluted ingredients of the previous treatment step due to the unavoidable drag over from the previous bath, if dip application is chosen.

The first rinsing composition preferably has a pH value in the range from 9 to 12, due to drag over from the previous cleaning composition and preferably contains all ingredients of the cleaning composition, but water-diluted.

The second rinsing composition preferably has a pH value in the range from 8 to 11, due to the drag over from the first rinsing compositions and preferably contains all ingredients of the first rinsing composition., but water-diluted.

The rinsing steps can also be carried out with water only, particularly in laboratory-scale experiments.

The above sequence of steps (i) to (iv) is also a preferred embodiment of step (a) of the method for coating according to the invention.

The pickling method according to the invention can also comprise one or more steps *subsequent* to the at least one step of contacting a metallic substrate with a composition according to the present invention (iv), namely one or more rinsing steps (v) to (vii).

Therefore, a preferred pickling method according to the present invention may also comprise
(iv) a step of contacting a metallic substrate with a composition according to the present invention, followed by
(v) a step of rinsing the metallic substrate with a third rinsing composition, optionally followed by
(vi) a step of rinsing the metallic substrate with a fourth rinsing composition, and optionally followed by
(vii) a step of rinsing the metallic substrate with a fifth rinsing composition.

The rinsing steps (v), (vi) and (vii) are preferably carried out by spray or dip applying the respective rinsing compositions. The rinsing compositions can just be composed of water, but are typically the water-diluted compositions from the respective previous steps due to the drag over from the respective previous steps. Carrying out the rinsing steps (v) to (vii) is particularly preferred if the pickling method according to the present invention is carried out continuously. In such case an accumulation of iron compounds in the pickling composition occurs if iron containing metallic substrates are pickled. Such iron compound can be washed-off in the respective rinsing step(s).

The above sequence of steps (iv) to (vii) is also a preferred embodiment of step (a) of the method for coating according to the invention.

To keep such iron compounds in solution, it is preferred that the third rinsing composition preferably has an acidic pH value in the range from 1 to 3 and preferably further contains the ingredients of the previous pickling composition, but water-diluted.

To avoid the formation of a rust film after the acidic rinse, the fourth rinsing composition preferably has an alkaline pH value in the range from 10 to 11 and preferably contains caustic plus a complexing agent. Rust film formation may particularly occur, if the pickling method is run as a continuous process and this process is interrupted and/or the time between the steps becomes too long.

If the pickling method according to the present invention is followed particularly by a phosphate conversion coating step, it is preferred that the fifth rinsing composition preferably has a pH value in the range from 9.5 to 10 and contains the ingredients of the forth rinsing composition, due to drag over, but water-diluted.

Typically, prior to a phosphate conversion coating step an activation step is carried out and prior to this conversion coating step it is neither preferred that the pH value of a rinsing composition is too high or too low. Therefore, it is particularly preferred that the pH value of the fifth rinsing solution is in the afore-mentioned slightly alkaline or neutral range. Particularly preferred in step (vii) is rinsing with water.

Of course, all steps prior to the step of contacting a metallic substrate with a composition according to the present invention and the steps subsequent to the step of contacting a metallic substrate with a composition according to the present invention can be carried out in combination in the pickling method according to the present invention.

In such case, the pickling method according to the invention preferably comprises
(i) a step of contacting a metallic substrate with a cleaning composition, optionally followed by
(ii) a step of rinsing the metallic substrate with a first rinsing composition, optionally followed by
(iii) a step of rinsing the metallic substrate with a second rinsing composition, followed by
(iv) a step of contacting the metallic substrate with a composition according to the present invention, followed by
(v) a step of rinsing the metallic substrate with a third rinsing composition, optionally followed by
(vi) a step of rinsing the metallic substrate with a fourth rinsing composition, and optionally followed by
(vii) a step of rinsing the metallic substrate with a fifth rinsing composition.

The cleaning composition, the rinsing compositions and the composition according to the invention being defined as above. The above sequence of steps (i) to (vii) is also a preferred embodiment of step (a) of the method for coating according to the invention.

### Coating Method According to the Invention

It is further provided a method for coating a metallic substrate comprising at least
(a) the pickling method according to the invention, followed by
(b) a step of coating the thus treated metallic substrate with a conversion coating composition obtaining a conversion coating layer, optionally followed by
(c) a step of applying an electrodeposition coating composition obtaining an electrodeposition coating layer; and optionally followed by
(d) one or more steps of applying one or more further coating composition(s) obtaining one or more further coating layer(s).

It is to be emphasized that the steps of the coating method according to the invention as described above are not necessarily the only steps possible in the coating method according the invention. Particularly any further rinsing, drying and/or curing step(s) may be carried out in addition to the above steps, if desired.

Thus, it is preferred to have at least one rinsing step (b") subsequent to step (b) and prior to step (c). It is also preferred to have at least one rinsing step (c') followed by a curing step (c") subsequent to step (c).

Preferably, the coating obtained in the coating method according to the invention is a multilayer coating. Even more preferred the coating obtained in the coating method according to the invention is a coating comprising a conversion coating layer, an electrodeposition coating layer and preferably at least one further coating layer.

### Step (a)

Thus, the coating method according to the invention comprises - as a pretreatment step - at least step (a), i.e. the pickling method according to the invention, particularly at least step (iv) of the pickling method according to the invention.

More preferably step (a) comprised in the coating method according the invention comprises steps (iv), (v), (vi) and (vii) of the pickling method of the invention.

Even more preferred, step (a) comprised in the coating method of the invention comprises steps (i) to (vii) of the pickling method according to the invention.

### Step (b)

Generally, any known conversion coating composition can be used in step (b) of the method for coating according to the present invention.

The conversion coating compositions used in the present invention are preferably acidic conversion coating compositions.

Preferably the conversion coating compositions used in the method for coating according to the present invention are selected from
i. phosphate conversion coating compositions, such as Ni-containing and Ni-free zinc phosphating compositions and trication phosphating compositions, the phosphate conversion coating compositions containing zinc ions and at least one of manganese ions and nickel ions,
ii. organosilane based conversion coating compositions containing at least one organosilane and/or its hydrolysis products and/or its condensation products; and
iii. passivating conversion coating compositions containing at least one compound selected from the groups of zirconium compounds, titanium compounds and hafnium compounds.

If a phosphate conversion step, particularly a zinc phosphating step or a trication phosphating step is carried out as step (b), it is preferred to carry out an additional activation step (a') after step (a) and prior to step (b). If carried out, the activation step (a') is carried out by contacting the metallic substrate subsequent to step (a) and prior to step (b) with an activation composition. Contacting is preferably carried out by dipping, flooding or spraying as descripted for contacting a metallic substrate with the composition according to the invention. Most preferred is contacting the metallic substrate by dip application of the activation composition. The duration of the contacting step with the activation composition preferably ranges from 5 to 300 seconds, more preferred 10 to 200 seconds and most preferred 20 to 90 seconds such as 30 to 60 seconds. Activation compositions or solutions are for example available from Chemetall GmbH (Frankfurt, Germany) under the trademark Gardolene^{®} V and Gardolene^{®} ZL.

If an activation step is carried out, the activation composition used therein preferably contains zinc phosphate crystals and/or titanium phosphate crystals, which facilitate the deposition of the phosphate conversion layer.

If a phosphate conversion step, particularly a zinc phosphating step or a trication phosphating step is carried out as step (b), it is preferred to carry out an additional passivation step (b') after step (b) and prior to step (c). Passivation compositions are for example available from Chemetall GmbH (Frankfurt, Germany) under the trademark Gardolene^{®} D.

Amongst the zinc phosphating compositions, Ni-containing compositions may be employed. However, for environmental reasons, Ni-free zinc phosphating conversion coating compositions are preferred, which contain Zn ions and Mn ions. A further variant of zinc phosphating conversion coating compositions are the so-called trication phosphate conversion coating compositions containing Zn, Mn and Ni ions. Phosphate conversion coating compositions are for example available from Chemetall GmbH (Frankfurt, Germany) under the trademark Gardobond^{®}.

Organosilane-based conversion coating compositions preferably contain at least one organosilane, the term "organosilane" including its hydrolysis products and condensation products, and optionally compounds selected from the group of zirconium compounds, titanium compounds and hafnium compounds. Such compositions are for example available from Chemetall GmbH (Frankfurt, Germany) under the trademark Oxsilan^{®} to produce thin-film systems.

Passivating conversion coating compositions preferably contain at least one compound selected from the groups of zirconium compounds, titanium compounds and hafnium compounds, more preferably a fluoro complex of titanium, zirconium and/or hafnium. Such conversion coating compositions optionally contain one or more organosilanes the term "organosilane" including its hydrolysis products and condensation products.

### Step (c)

In step (c) an electrodeposition coating composition is applied to the conversion coating layer formed in step (b). Electrodeposition coating compositions are aqueous coating compositions which are applied by dip coating, i.e. dipping the pickled, conversion coated metallic substrate into the electrically conductive, aqueous electrodeposition coating composition and applying a direct voltage between the substrate and a counter electrode.

The electrodeposition coating composition is an anodic or cathodic electrodeposition coating composition, preferably a cathodic electrodeposition coating composition.

Cathodic electrodeposition coating compositions are preferably selected from epoxy-type and poly(meth)acrylate-type electrodeposition coating compositions. They are applied according to the coating manufacturers specifications.

Subsequent to step (c) the formed electrodeposition coating layer is preferably rinsed (step (c')) and cured (step (c")) according to the paint manufacturers specifications.

### Step (d) or Steps (d)

Subsequent to the electrodeposition coating step (c) it is preferred to apply one or more further coating compositions. Such further coating compositions are preferably selected from water-based coating compositions, solvent-borne coating compositions or UV-curing coating compositions. However, so-called powder coating compositions can also be applied.

Particularly preferred at least one of a filler coating composition, a basecoat composition and a clear coat composition is applied. If a plurality of coating layers is applied (i.e. at least two coating compositions), the application can be carried out wet-in-wet and afterwards the coating layers can be cured simultaneously. However, it is also possible to carry out drying steps and/or curing steps between the application of at least some or all of the plurality of coating compositions as may be used in step(s) (d).

The method for coating metallic substrates according to the invention provides well adhering, corrosion-resistant coatings, preferably multilayer coatings.

### Use according to the Invention

The invention further provides the use of the compositions according to the invention for pickling metallic substrates, the metallic substrates being the metallic substrates as described above.

The compositions and their use provide for a balanced and mild, but sufficiently high pickling, if applied to different metallic substrates, thus allowing to pickle different metallic substrates with the same pickling composition one after each other, or if desired, in form of pre-assembled parts comprising different metallic substrates.

In the following the invention will be further explained by providing working examples.

### EXAMPLES

### Testing Procedures

### Determination of the Pickling Weight Loss

Two test panels made of CRS (cold-rolled steel) and HDG (hot dip galvanized steel) were in each case weighed before treatment with one of the pickling solutions.

After pickling, all panels were rinsed with deionized water, dried and weighed. The weight loss caused by the treatment with pickling solution (i.e. the pickling weight loss) in each case represents the removal of material. In each case the average of the three panels was calculated.

The pickling weight loss should preferably not exceed 2.5 g/m², because surface defects are likely to occur resulting in insufficient adhesion of any subsequent coating layers. Furthermore, the pickling weight loss should preferably not be below 0.5 g/m², because otherwise insufficient pickling is likely.

A balanced pickling weight loss for a specific pickling composition is achieved, if the difference in pickling weight loss for CRS and HDG is 0.6 g/m² or less and the pickling weight loss for both materials is in the range from 0.5 g/m² to 2.5 g/m².

### Determination of the Conversion Coating Layer Weight

The conversion layer weight for the pickled zinc phosphatized metallic substrates is determined by XRF analysis and expressed in g/m², calculated as P₂O₅.

In case of the pickled zinc phosphatized metallic substrates, the conversion layer weight is supposed to be good, if it does not exceed 4.0 g/m² for CRS and if it does not exceed 3.5 g/m² for HDG.

The conversion layer weight for the pickled Oxsilan^{®} treated metallic substrates is determined by Zr and expressed in mg/m², calculated as Zr.

In case of the pickled Oxsilan^{®} 9832 treated metallic substrates, the conversion layer weight is supposed to be good, if it does not exceed 150 g/m² for CRS and if it does not exceed 150 g/m² for HDG. In case of the pickled Oxsilan^{®} 9810/2 treated metallic substrates, the conversion layer weight is supposed to be good, if it does not exceed 200 g/m² for CRS and if it does not exceed 150 g/m² for HDG.

### Cross-Cut Adhesion Test

The pickled, conversion coated and electrodeposition coated metallic substrates were subjected to the cross-cut adhesion test according to DIN EN ISO 2409.

If no delamination is observed, the results are rated "0", complete delamination is rated "5". All other grades of delamination are between "0" and "5". An acceptable delamination is rated "0" or "1". The results are average results from two panels.

### Electrochemical Delamination Test

The pickled, conversion coated and electrodeposition coated metallic substrates were subjected to the electrochemical delamination test according to the current AA-0175 norm from BMW.

Delamination is measured in millimeter [mm]. An acceptable delamination is less 2 mm. The results are average results from two panels.

### Preparation Examples

### Pickling of Metallic Substrates

### Pickling for the determination of the pickling weight loss

Panels made of CRS (cold-rolled steel) and HDG (hot dip galvanized steel) were cleaned with an aqueous solution of Gardoclean^{®} S5411 (20 g/L; pH value 10.5) at a temperature of 55 °C for 3 min by spray cleaning and 5 min by dip cleaning. Afterwards the panels were rinsed with water containing the ingredients of the drag over of the previous composition (cleaner bath).

Two panels in each case were immersed for 10 minutes in a bath comprising one of the inventive pickling compositions I1 and I2; or one of the comparative pickling compositions C1 to C5 (see Table 1). The compositions were aqueous solutions of compounds A, B, C, D and E (comparative); or aqueous solutions of an inventive compounds F (11) as shown in Table 1. The baths had a temperature of 55 °C. The panels were rotated at a speed of 250 rpm.

**Table 1**

| Pickling Composition | Compound(s) | Amount [wt.-%] | pH value¹ |
|---|---|---|---|
| C1 | A | 1.3 | 7.5 |
| C2 | B | 1.3 | 7.5 |
| C3 | C | 1.3 | 7.5 |
| C4 | D | 0.5 | 7.5 |
| C5 | E | 0.4 | 7.5 |
| I1 | F | 0.5 | 7.5 |

| | | | |
|---|---|---|---|
| ¹ adjusted by addition of a 50 wt.-% KOH solution in water | | | |

| | |
|---|---|
| A: | 1-hydroxyethane-1,1-diphosphonic acid |
| B: | amino tri(methylene phosphonic acid) |
| C: | ethylenediamine tetra(methylene phosphonic acid) |
| D: | acrylic acid-maleic acid (50:50) copolymer M_{w} = 70,000 g/mol |
| E: | copolymer of acrylic acid, maleic acid and a non-carboxy, hydrophilic ethylenically unsaturated monomer |
| F: | vinyl acetate-vinyl pyrrolidone (40:60) copolymer (molar ratio) |

After pickling the panels, the panels were taken out of the baths and rinsed with water containing some drag over from the previous step. The thus pickled panels were dried and used to determine the pickling weight loss according to the above described procedure.

### Pickling as Pretreatment before carrying out the Coating Steps

Further panels made of CRS and HDG, respectively, were cleaned and rinsed as described above and subsequently immersed for 5 and 10 minutes, respectively, in a bath comprising one of the pickling compositions as shown in Table 2. The pickling compositions are an inventive aqueous solutions of compound F (12) and a comparative solution of compound D (C5) in the respective amounts. The baths had a temperature of 55 °C. The bath solution was stirred at a speed of 250 rpm.

**Table 2**

| Pickling Composition | Compound(s) | Amount [wt.-%] | pH value¹ |
|---|---|---|---|
| I2 | F | 0.5 | 6.8 |
| C6 | D | 0.5 | 6.8 |

| | | | |
|---|---|---|---|
| ¹ adjusted by addition of KOH solution in water | | | |

| | |
|---|---|
| D: | acrylic acid-maleic acid (50:50) copolymer M_{w} = 70,000 g/mol |
| F: | vinyl acetate-vinyl pyrrolidone (40:60) copolymer (molar ratio) |

The thus pickled panels were first rinsed with tab water and subsequently rinsed with water deionized prior to conversion coating the thus pickled metallic substrates were used wet before carrying out conversion coating.

### Conversion Coating of Pickled Metallic Substrates

The pickled test panels made of CRS and HDG (pickled with the pickling composition according to Table 2) were in each case contacted with either a zinc phosphate based conversion coating composition (available from Chemetall GmbH, Frankfurt, Germany) or a silane based conversion coating compositions (Oxsilan^{®} 9832, commercially available from Chemetall GmbH, Frankfurt, Germany).

### Zinc Phosphating Conversion Coating

The panels to be coated with the zinc phosphate conversion coating composition were activated with Gardolene^{®} V 6559 (commercially available from Chemetall GmbH, Frankfurt, Germany) by dipping the panels into a 1 g/L solution of Gardolene^{®} V 6559 for 30 to 60 s at room temperature (about 23 °C).

Zinc phosphating was carried out by dip coating the activated panels into Gardobond^{®} 24 T (commercially available from Chemetall GmbH, Frankfurt, Germany) for 3 min at 55 °C.

Subsequently, the panels coated with the zinc phosphate conversion coating composition were passivated with Gardolene^{®} D 6800/8 (commercially available from Chemetall GmbH, Frankfurt, Germany) by dipping the panels into a 2.1 g/L solution of Gardolene^{®} D 6800/8 (pH 4.3) for 30 sec at room temperature (about 23 °C).

### Silane-based Conversion Coating

The panels to be coated with the silane-based conversion coating composition were neither activated prior to conversion coating, nor passivated after conversion coating.

To produce the conversion coating layers, the pickled panels were dipped in a bath comprising the Oxsilan^{®} conversion coating composition (Oxsilan^{®} 9832 and Oxsilan^{®} 9810/2, respectively) for 3 min at a temperature of 35 °C.

After conversion coating and prior to electrodeposition coating the conversion coated, pickled metallic substrates were rinsed in deionized water.

The thus conversion coated panels were subjected to the determination of the conversion layer weight as described above.

### Electrodeposition Coating of The Conversion Coated, Pickled Metallic Substrates

The conversion coated, pickled CRS panels were subjected to electrodeposition coating with CathoGuard^{®} 800 electrodeposition coating composition, which is commercially available from BASF Coatings GmbH (Münster-Hiltrup, Germany).

The thus electrodeposition coated panels were rinsed and dried in the oven at a temperature of 175 °C for 15 min and ended up with a thickness of 18-22 µm prior to cross-cut testing and electrochemical delamination testing as described above.

### Test Results

Table 3 below shows the results from the pickling weight loss determination and confirms that the inventive composition I1 shows a mild, but sufficient pickling, all in the range of 0.8 g/m² to 1.4 g/m² on both, CRS and HDG, and good balance in pickling weight loss of just 0.6 g/m².

To the contrary, using the comparative pickling solutions comprising different phosphonates (C1 to C3), show either a too aggressive pickling on HDG accompanied by an unbalanced pickling (C1, C2) or an insufficient pickling on HDG (C3). The sole use of anionic polymers (C3 and C4) shows an insufficient pickling on HDG.

**Table 3**

| Pickling Composition | Pickling Weight Loss [g/m²] | | Δ Pickling Weight Loss [g/m²] |
|---|---|---|---|
| | CRS | HDG | |
| C1 | 0.7 | 2.6 | 1.9 |
| C2 | 0.7 | 7.5 | 6.8 |
| C3 | 0.5 | 0.3 | 0.2 |
| C4 | 0.5 | 0.4 | 0.1 |
| C5 | 0.2 | 0.1 | 0.1 |
| I1 | 1.4 | 0.8 | 0.6 |

The results shown in Table 4 below reflect the weight of the zinc phosphate conversion layers in g/m² calculated as P₂O₅ obtained on CRS and HDG panels, pickled for 5 and 10 min respectively. The target value is preferably 4 g/m² or below for CRS and below 3.5 g/m² for HDG. While the target for HDG is observed by both compositions for both time spans of pickling, the comparative composition fails on CRS, when pickling is carried out for 5 min and 10 min, while the inventive composition fulfills the requirement.

**Table 4**

| Pickling Composition | Conversion Layer Weight / Zinc Phosphate Conversion [g/m²] | |
|---|---|---|
| | CRS (5 min / 10 min) | HDG (5 min / 10 min) |
| I2 | 3.2 / 3.3 | 2.8 / 2.8 |
| C6 | 4.3 / 4.2 | 3.1 /3.2 |

The results shown in Table 5 below reflect the weight of the Oxsilan^{®} 9832 conversion layers in g/m² calculated as Zr obtained on CRS and HDG panels, pickled for 5 and 10 min, respectively. The target values are preferably below 150 g/m² for CRS and HDG, which is observed in all cases, except for the comparative example C6 on CRS for 5 and 10 min.

**Table 5**

| Pickling Composition | Conversion Layer Weight / Oxsilan^{®} 9832 Conversion [g/m²] | |
|---|---|---|
| | CRS (5 min / 10 min) | HDG (5 min / 10 min) |
| I2 | 30 / 32 | 97 / 118 |
| C6 | 159 / 168 | 64 / 72 |

The results shown in Table 6 below reflect the weight of the Oxsilan^{®} 9810/2 conversion layers in g/m² calculated as Zr obtained on CRS and HDG panels, pickled for 5 and 10 min, respectively. The target value is preferably below 200 g/m² for CRS and 150 g/m² for HDG, which are observed in all cases, except for the comparative example C6 on CRS for 5 and 10 min.

**Table 6**

| Pickling Composition | Conversion Layer Weight / Oxsilan^{®} 9832 Conversion [g/m²] | |
|---|---|---|
| | CRS (5 min / 10 min) | HDG (5 min / 10 min) |
| I2 | 88 / 87 | 136 / 165 |
| C6 | 318 / 297 | 120 / 137 |

Table 7 shows the cross-cut adhesion test results obtained for CRS panels, pickled for 5 and 10 min, respectively, and conversion coated with Oxsilan^{®} 9832 before applying, rinsing, drying and curing a CathoGuard^{®} 800 cathodic electrodeposition coating layer. As the examples show, no adhesion failure is observed for the inventive example, while the comparative example completely failed.

**Table 7**

| Pickling Composition | Cross Cut Adhesion Test Results after Electrodeposition Coating with CathoGuard^{®} 800 |
|---|---|
| | CRS/Oxsilan^{®} 9832 (5 min/10 min) |
| I2 | 0/0 |
| C6 | 5/5 |

Table 8 shows the results from the electrochemical delamination test on CRS/Oxsilan^{®} 9832.

**Table 8**

| Pickling Composition | Electrochemical Delamination in [mm] |
|---|---|
| | CRS/Oxsilan^{®} 9832 (5 min) |
| I2 | 1.1 |
| C6 | 3.5 |

Thus, Tables 7 and 8 show that only the coating layers applied to inventively pickled metallic substrates possess a perfect adhesion in the cross-cut adhesion test as well as the electrochemical delamination test. A good delamination value is a value < 2.0 mm. Only the inventive sample shows a very good value below 1 mm, while the comparative sample severe delamination.

## Claims

1. A phosphonate-free, aqueous pickling composition having a pH value at 55 °C in the range from 5 to 9, and containing at least one copolymer, which is water-soluble or water-dispersible and selected from the group consisting of polyvinylpyrrolidones; the content of water being in the range from 95.0 wt.-% to 99.9 wt.-% based on the total weight of the composition, wherein the polyvinylpyrrolidone is a random polymer polymerized from a mixture of vinyl pyrrolidone and vinyl acetate or a random polymer polymerized from a mixture of vinyl pyrrolidone and vinyl acetate and a further monoethylenically unsaturated monomer, wherein the molar ratio of vinyl acetate to vinyl pyrrolidone is from 30:70 to 70:30, wherein the polyvinylpyrrolidone has a weight average molecular weight from 15,000 to 100,000 g/mol (determined by gel permeation chromatography).

2. The aqueous composition according to claim 1, wherein the polyvinylpyrrolidone contains the further monoethylenically unsaturated monomer.

3. The aqueous composition according to claim 1 or 2, wherein 0 to 10 mol-% of the combined amount of vinyl acetate and vinylpyrrolidone are replaced by the further monoethylenically unsaturated monomer, which is selected from vinyl monomers, acrylate monomers and methacrylate monomers.

4. The aqueous composition according to any one of claims 1 to 3, having a pH value from 6.0 to 8.0.

5. The aqueous composition according to any one of claims 1 to 4, wherein the amount of all water-soluble or water-dispersible copolymers as defined in claims 1 to 3, ranges from 0.05 to 2.0 wt.-% based on the total weight of the composition according to the invention.

6. The aqueous composition according to any one of claims 1 to 5, wherein the total amount of further ingredients, which differ from the water-soluble or water-dispersible copolymers as defined in claims 1 to 3, is less than 50 wt.-% of the combined amount of ingredients consisting of the further ingredients and the water-soluble or water-dispersible copolymers as defined in claims 1 to 3.

7. The aqueous composition according to any one of claims 1 to 6, which is protease free and/or free from polymers other than the water-soluble or water-dispersible copolymers as defined in claims 1 to 3.

8. A concentrate for producing the compositions as defined in any one of claims 1 to 7, comprising
a liquid medium composed of water and/or organic solvents,
the water-soluble or water-dispersible copolymer as defined in claim 1; and any further ingredients of the composition according to any one of claims 1 to 7,
wherein the sum of the amount the water-soluble or water-dispersible copolymers as defined in claim 1 and the further ingredients, if contained, range from 10 wt.-% to 90 wt.-% of the total weight of the concentrate.

9. A method for pickling a metallic substrate comprising at least one step of contacting the metallic substrate with a phosphonate-free, aqueous pickling composition having a pH value at 55 °C in the range from 5 to 9, and containing at least one copolymer, which is water-soluble or water-dispersible and selected from the group consisting of polyvinylpyrrolidones; the content of water being in the range from 95.0 wt.-% to 99.9 wt.-% based on the total weight of the composition, wherein the polyvinylpyrrolidone is a random polymer polymerized from a mixture of vinyl pyrrolidone and vinyl acetate or a random polymer polymerized from a mixture of vinyl pyrrolidone and vinyl acetate and a further monoethylenically unsaturated monomer, wherein the molar ratio of vinyl acetate to vinyl pyrrolidone is from 30:70 to 70:30.

10. The method for pickling a metallic substrate according to claim 9, comprising
(i) a step of contacting the metallic substrate with a cleaning composition, or
(ii) a step of contacting the metallic substrate with a cleaning composition followed by a step of rinsing the metallic substrate with a first rinsing composition, or
(iii) a step of contacting the metallic substrate with a cleaning composition followed by a step of rinsing the metallic substrate with a first rinsing composition followed by a step of rinsing the metallic substrate with a second rinsing composition, wherein (i) or (ii) or (iii) is followed by
(iv) a step of contacting the metallic substrate with a phosphonate-free, aqueous pickling composition having a pH value at 55 °C in the range from 5 to 9, and containing at least one copolymer, which is water-soluble or water-dispersible and selected from the group consisting of polyvinylpyrrolidones; the content of water being in the range from 95.0 wt.-% to 99.9 wt.-% based on the total weight of the composition, wherein the polyvinylpyrrolidone is a random polymer polymerized from a mixture of vinyl pyrrolidone and vinyl acetate or a random polymer polymerized from a mixture of vinyl pyrrolidone and vinyl acetate and a further monoethylenically unsaturated monomer, wherein the molar ratio of vinyl acetate to vinyl pyrrolidone is from 30:70 to 70:30, followed by
(v) a step of rinsing the metallic substrate with a third rinsing composition, or
(vi) a step of rinsing the metallic substrate with a third rinsing composition followed by a step of rinsing the metallic substrate with a fourth rinsing composition, or
(vii) a step of rinsing the metallic substrate with a third rinsing composition followed by a step of rinsing the metallic substrate with a fourth rinsing composition followed by a step of rinsing the metallic substrate with a fifth rinsing composition.

11. The method for pickling a metallic substrate according to claim 9 or 10, wherein the metallic substrate is selected from the group consisting of steel, galvanized steel and aluminum and its alloys.

12. A method for coating a metallic substrate comprising at least
(a) the method for pickling a metallic substrate according to any one of claims 9 to 11, followed by
(b) a step of coating the thus pickled metallic substrate with a conversion coating composition, or
(c) step (b) followed by a step of applying an electrodeposition coating composition; or
(d) step (b) followed by step (c) followed by one or more steps of applying one or more further coating composition(s).

13. The method for coating a metallic substrate according to claim 12, wherein the conversion coating composition used in step (b) is selected from the group consisting of
i. phosphate conversion coating compositions containing zinc ions and at least one of manganese ions and nickel ions,
ii. organosilane based conversion coating compositions containing at least one organosilane and/or its hydrolysis products and/or its condensation products; and
iii. passivating conversion coating compositions containing at least one compound selected from the groups of zirconium compounds, titanium compounds and hafnium compounds; and
in case of using a phosphate conversion coating composition, the pickled metallic substrate obtained in step (a) is contacted with an activation composition comprising zinc phosphate crystals and/or titanium phosphate crystals prior to carrying out step (b); and
in case of using a phosphate conversion coating composition, the conversion coated metallic substrate obtained in step (b) is contacted with a passivation composition comprising at least one compound selected from the groups of zirconium compounds, titanium compounds and hafnium compounds.

14. The method for coating a metallic substrate according to claim 12 or 13, wherein the electrodeposition coating composition used in step (c) is selected from the group consisting of anodic and cathodic electrodeposition coating compositions; and in case of using cathodic electrodeposition coating compositions the cathodic electrodeposition coating compositions are selected from the group consisting epoxy-type electrodeposition coating compositions and poly(meth)acrylate-type electrodeposition coating compositions; and subsequently to step (c), drying and curing the electrodeposition coating.

15. The method for coating a metallic substrate according to any one of claims 12 to 14, wherein the further coating compositions used in step (d) are selected from filler compositions, basecoat compositions and clear coat coating compositions.

## Patentansprüche

1. Phosphonatfreie wässrige Beizzusammensetzung mit einem pH-Wert bei 55 °C in dem Bereich von 5 bis 9 und enthaltend wenigstens ein Copolymer, das wasserlöslich oder wasserdispergierbar ist und ausgewählt ist aus der Gruppe bestehend aus Polyvinylpyrrolidonen; wobei der Gehalt an Wasser in dem Bereich von 95,0 Gew.-% bis 99,9 Gew.-%, bezogen auf das Gesamtgewicht der Zusammensetzung, liegt, wobei das Polyvinylpyrrolidon ein statistisches Polymer ist, das aus einem Gemisch von Vinylpyrrolidon und Vinylacetat polymerisiert ist, oder ein statistisches Polymer, das aus einem Gemisch von Vinylpyrrolidon und Vinylacetat und einem weiteren monoethylenisch ungesättigten Monomer polymerisiert ist, wobei das Molverhältnis von Vinylacetat zu Vinylpyrrolidon von 30:70 bis 70:30 beträgt, wobei das Polyvinylpyrrolidon ein gewichtsmittleres Molekulargewicht von 15.000 bis 100.000 g/mol (bestimmt durch Gelpermeationschromatographie) aufweist.

2. Wässrige Zusammensetzung nach Anspruch 1, wobei das Polyvinylpyrrolidon das weitere monoethylenisch ungesättigte Monomer enthält.

3. Wässrige Zusammensetzung nach Anspruch 1 oder 2, wobei 0 bis 10 Mol-% der kombinierten Menge von Vinylacetat und Vinylpyrrolidon durch das weitere monoethylenisch ungesättigte Monomer, das ausgewählt ist aus Vinylmonomeren, Acrylatmonomeren und Methacrylatmonomeren, ersetzt sind.

4. Wässrige Zusammensetzung nach einem der Ansprüche 1 bis 3 mit einem pH-Wert von 6,0 bis 8,0.

5. Wässrige Zusammensetzung nach einem der Ansprüche 1 bis 4, wobei die Menge aller wasserlöslichen oder wasserdispergierbaren Copolymere nach Ansprüchen 1 bis 3 in dem Bereich von 0,05 bis 2,0 Gew.-%, bezogen auf das Gesamtgewicht der erfindungsgemäßen Zusammensetzung, liegt.

6. Wässrige Zusammensetzung nach einem der Ansprüche 1 bis 5, wobei die Gesamtmenge an weiteren Inhaltsstoffen, die von den wasserlöslichen oder wasserdispergierbaren Copolymeren nach Ansprüchen 1 bis 3 verschieden sind, weniger als 50 Gew.-% der kombinierten Menge an Inhaltsstoffen, bestehend aus den weiteren Inhaltsstoffen und den wasserlöslichen oder wasserdispergierbaren Copolymeren nach Ansprüchen 1 bis 3, beträgt.

7. Wässrige Zusammensetzung nach einem der Ansprüche 1 bis 6, die proteasefrei und/oder frei von anderen Polymeren als den wasserlöslichen oder wasserdispergierbaren Copolymeren nach Ansprüchen 1 bis 3 ist.

8. Konzentrat zur Herstellung der Zusammensetzungen nach einem der Ansprüche 1 bis 7, umfassend
ein flüssiges Medium aus Wasser und/oder organischen Lösungsmitteln,
das wasserlösliche oder wasserdispergierbare Copolymer nach Anspruch 1; und
etwaige weitere Inhaltsstoffe der Zusammensetzung nach einem der Ansprüche 1 bis 7,
wobei die Summe der Menge der wasserlöslichen oder wasserdispergierbaren Copolymere nach Anspruch 1 und der weiteren Inhaltsstoffe, falls enthalten, in dem Bereich von 10 Gew.-% bis 90 Gew.-% des Gesamtgewichts des Konzentrats liegt.

9. Verfahren zum Beizen eines metallischen Substrats, umfassend wenigstens einen Schritt des Inkontaktbringens des metallischen Substrats mit einer phosphonatfreien, wässrigen Beizzusammensetzung mit einem pH-Wert bei 55 °C in dem Bereich von 5 bis 9 und enthaltend wenigstens ein Copolymer, das wasserlöslich oder wasserdispergierbar ist und ausgewählt ist aus der Gruppe bestehend aus Polyvinylpyrrolidonen; wobei der Gehalt an Wasser in dem Bereich von 95,0 Gew.-% bis 99,9 Gew.-%, bezogen auf das Gesamtgewicht der Zusammensetzung, liegt, wobei das Polyvinylpyrrolidon ein statistisches Polymer ist, das aus einem Gemisch von Vinylpyrrolidon und Vinylacetat polymerisiert ist, oder ein statistisches Polymer, das aus einem Gemisch von Vinylpyrrolidon und Vinylacetat und einem weiteren monoethylenisch ungesättigten Monomer polymerisiert ist, wobei das Molverhältnis von Vinylacetat zu Vinylpyrrolidon von 30:70 bis 70:30 beträgt.

10. Verfahren zum Beizen eines metallischen Substrats nach Anspruch 9, umfassend
(i) einen Schritt des Inkontaktbringens des metallischen Substrats mit einer Reinigungszusammensetzung, oder
(ii) einen Schritt des Inkontaktbringens des metallischen Substrats mit einer Reinigungszusammensetzung, gefolgt von einem Schritt des Spülens des metallischen Substrats mit einer ersten Spülzusammensetzung, oder
(iii) einen Schritt des Inkontaktbringens des metallischen Substrats mit einer Reinigungszusammensetzung, gefolgt von einem Schritt des Spülens des metallischen Substrats mit einer ersten Spülzusammensetzung, gefolgt von einem Schritt des Spülens des metallischen Substrats mit einer zweiten Spülzusammensetzung, wobei (i) oder (ii) oder (iii) gefolgt ist von
(iv) einem Schritt des Inkontaktbringens des metallischen Substrats mit einer phosphonatfreien, wässrigen Beizzusammensetzung mit einem pH-Wert bei 55 °C in dem Bereich von 5 bis 9 und enthaltend wenigstens ein Copolymer, das wasserlöslich oder wasserdispergierbar ist und ausgewählt ist aus der Gruppe bestehend aus Polyvinylpyrrolidonen; wobei der Gehalt an Wasser in dem Bereich von 95,0 Gew.-% bis 99,9 Gew.-%, bezogen auf das Gesamtgewicht der Zusammensetzung, liegt, wobei das Polyvinylpyrrolidon ein statistisches Polymer ist, das aus einem Gemisch von Vinylpyrrolidon und Vinylacetat polymerisiert ist, oder ein statistisches Polymer, das aus einem Gemisch von Vinylpyrrolidon und Vinylacetat und einem weiteren monoethylenisch ungesättigten Monomer polymerisiert ist, wobei das Molverhältnis von Vinylacetat zu Vinylpyrrolidon von 30:70 bis 70:30 beträgt, gefolgt von
(v) einem Schritt des Spülens des metallischen Substrats mit einer dritten Spülzusammensetzung, oder
(vi) einem Schritt des Spülens des metallischen Substrats mit einer dritten Spülzusammensetzung, gefolgt von einem Schritt des Spülens des metallischen Substrats mit einer vierten Spülzusammensetzung, oder
(vii) einem Schritt des Spülens des metallischen Substrats mit einer dritten Spülzusammensetzung, gefolgt von einem Schritt des Spülens des metallischen Substrats mit einer vierten Spülzusammensetzung, gefolgt von einem Schritt des Spülens des metallischen Substrats mit einer fünften Spülzusammensetzung.

11. Verfahren zum Beizen eines metallischen Substrats nach Anspruch 9 oder 10, wobei das metallische Substrat ausgewählt ist aus der Gruppe bestehend aus Stahl, verzinktem Stahl und Aluminium und dessen Legierungen.

12. Verfahren zum Beschichten eines metallischen Substrats, umfassend wenigstens
(a) das Verfahren zum Beizen eines metallischen Substrats nach einem der Ansprüche 9 bis 11, gefolgt von
(b) einem Schritt des Beschichtens des so gebeizten metallischen Substrats mit einer Konversionsbeschichtungszusammensetzung, oder
(c) Schritt (b), gefolgt von einem Schritt des Aufbringens einer Elektroabscheidungs-Beschichtungszusammensetzung; oder
(d) Schritt (b), gefolgt von Schritt (c), gefolgt von einem oder mehreren Schritten des Aufbringens einer oder mehrerer weiterer Beschichtungszusammensetzungen.

13. Verfahren zum Beschichten eines metallischen Substrats nach Anspruch 12, wobei die bei Schritt (b) verwendete Konversionsbeschichtungszusammensetzung ausgewählt ist aus der Gruppe bestehend aus
i. Phosphat-Konversionsbeschichtungszusammensetzungen, die Zinkionen und wenigstens eines von Manganionen und Nickelionen enthalten,
ii. Konversionsbeschichtungszusammensetzungen auf Organosilanbasis, die wenigstens ein Organosilan und/oder dessen Hydrolyseprodukte und/oder dessen Kondensationsprodukte enthalten, und
iii. passivierenden Konversionsbeschichtungszusammensetzungen, die wenigstens eine Verbindung ausgewählt aus den Gruppen von Zirkoniumverbindungen, Titanverbindungen und Hafniumverbindungen enthalten; und
wobei im Fall der Verwendung einer Phosphat-Konversionsbeschichtungszusammensetzung das bei Schritt (a) erhaltene gebeizte metallische Substrat vor der Durchführung von Schritt (b) mit einer Aktivierungszusammensetzung, die Zinkphosphatkristalle und/oder Titanphosphatkristalle umfasst, in Kontakt gebracht wird; und
wobei im Fall der Verwendung einer Phosphat-Konversionsbeschichtungszusammensetzung das bei Schritt (b) erhaltene konversionsbeschichtete metallische Substrat mit einer passivierenden Zusammensetzung, die wenigstens eine Verbindung ausgewählt aus den Gruppen von Zirkoniumverbindungen, Titanverbindungen und Hafniumverbindungen umfasst, in Kontakt gebracht wird.

14. Verfahren zum Beschichten eines metallischen Substrats nach Anspruch 12 oder 13, wobei die bei Schritt (c) verwendete Elektroabscheidungs-Beschichtungszusammensetzung ausgewählt ist aus der Gruppe bestehend aus anodischen und kathodischen Elektroabscheidungs-Beschichtungszusammensetzungen; und im Fall der Verwendung kathodischer Elektroabscheidungs-Beschichtungszusammensetzungen die kathodischen Elektroabscheidungs-Beschichtungszusammensetzungen
ausgewählt sind aus der Gruppe bestehend aus Elektroabscheidungs-Beschichtungszusammensetzungen vom Epoxytyp und Elektroabscheidungs-Beschichtungszusammensetzungen vom Poly(meth)acrylattyp; und nach Schritt (c) die Elektroabscheidungsbeschichtung getrocknet und gehärtet wird.

15. Verfahren zum Beschichten eines metallischen Substrats nach einem der Ansprüche 12 bis 14, wobei die bei Schritt (d) verwendeten weiteren Beschichtungszusammensetzungen ausgewählt sind aus Füllstoffzusammensetzungen, Grundlackzusammensetzungen und Klarlackbeschichtungszusammensetzungen.

## Revendications

1. Composition aqueuse de décapage sans phosphonate ayant une valeur de pH à 55 °C dans la plage allant de 5 à 9 et contenant au moins un copolymère, qui est soluble dans l'eau ou dispersible dans l'eau et choisi dans le groupe constitué par les polyvinylpyrrolidones ; la teneur en eau étant dans la plage allant de 95,0 % en poids à 99,9 % en poids par rapport au poids total de la composition, dans laquelle la polyvinylpyrrolidone est un polymère aléatoire polymérisé à partir d'un mélange de vinylpyrrolidone et d'acétate de vinyle ou un polymère aléatoire polymérisé à partir d'un mélange de vinylpyrrolidone et d'acétate de vinyle et d'un monomère à monoinsaturation éthylénique supplémentaire, le rapport molaire de l'acétate de vinyle à la vinylpyrrolidone allant de 30:70 à 70:30, la polyvinylpyrrolidone ayant une masse moléculaire moyenne en poids (déterminée par chromatographie par perméation de gel) allant de 15 000 à 100 000 g/mol.

2. Composition aqueuse selon la revendication 1, dans laquelle la polyvinylpyrrolidone contient le monomère à monoinsaturation éthylénique supplémentaire.

3. Composition aqueuse selon la revendication 1 ou 2, dans laquelle 0 à 10 % en mole de la quantité combinée d'acétate de vinyle et de vinylpyrrolidone est remplacée par le monomère à monoinsaturation éthylénique supplémentaire, qui est choisi parmi les monomères vinyliques, les monomères acrylates et les monomères méthacrylates.

4. Composition aqueuse selon l'une quelconque des revendications 1 à 3, ayant une valeur de pH allant de 6,0 à 8,0.

5. Composition aqueuse selon l'une quelconque des revendications 1 à 4, dans laquelle la quantité de tous les copolymères solubles dans l'eau ou dispersibles dans l'eau tels que définis dans les revendications 1 à 3 est dans la plage allant de 0,05 à 2,0 % en poids par rapport au poids total de la composition selon l'invention.

6. Composition aqueuse selon l'une quelconque des revendications 1 à 5, dans laquelle la quantité totale d'ingrédients supplémentaires, qui sont différents des copolymères solubles dans l'eau ou dispersibles dans l'eau tels que définis dans les revendications 1 à 3, est inférieure à 50 % en poids de la quantité combinée d'ingrédients constitués des ingrédients supplémentaires et des copolymères solubles dans l'eau ou dispersibles dans l'eau tels que définis dans les revendications 1 à 3.

7. Composition aqueuse selon l'une quelconque des revendications 1 à 6, qui est sans protéase et/ou sans polymères autres que les copolymères solubles dans l'eau ou dispersibles dans l'eau tels que définis dans les revendications 1 à 3.

8. Concentré pour la production des compositions telles que définies dans l'une quelconque des revendications 1 à 7, comprenant
un milieu liquide composé d'eau et/ou de solvants organiques,
le copolymère soluble dans l'eau ou dispersible dans l'eau tel que défini dans la revendication 1 ; et
de quelconques ingrédients supplémentaires de la composition selon l'une quelconque des revendications 1 à 7,
dans lequel la somme de la quantité des copolymères solubles dans l'eau ou dispersibles dans l'eau tels que définis dans la revendication 1 et des ingrédients supplémentaires, le cas échéant, est dans la plage allant de 10 % en poids à 90 % en poids rapporté au poids total du concentré.

9. Procédé pour le décapage d'un substrat métallique comprenant au moins une étape de mise en contact du substrat métallique avec une composition aqueuse de décapage sans phosphonate ayant une valeur de pH à 55 °C dans la plage allant de 5 à 9 et contenant au moins un copolymère, qui est soluble dans l'eau ou dispersible dans l'eau et choisi dans le groupe constitué par les polyvinylpyrrolidones ; la teneur en eau étant dans la plage allant de 95,0 % en poids à 99,9 % en poids par rapport au poids total de la composition, dans lequel la polyvinylpyrrolidone est un polymère aléatoire polymérisé à partir d'un mélange de vinylpyrrolidone et d'acétate de vinyle ou un polymère aléatoire polymérisé à partir d'un mélange de vinylpyrrolidone et d'acétate de vinyle et d'un monomère à monoinsaturation éthylénique supplémentaire, le rapport molaire de l'acétate de vinyle à la vinylpyrrolidone allant de 30:70 à 70:30.

10. Procédé pour le décapage d'un substrat métallique selon la revendication 9, comprenant
(i) une étape de mise en contact du substrat métallique avec une composition de nettoyage, ou
(ii) une étape de mise en contact du substrat métallique avec une composition de nettoyage suivie d'une étape de rinçage du substrat métallique avec une première composition de rinçage, ou
(iii) une étape de mise en contact du substrat métallique avec une composition de nettoyage suivie d'une étape de rinçage du substrat métallique avec une première composition de rinçage suivie d'une étape de rinçage du substrat métallique avec une deuxième composition de rinçage, dans lequel (i) ou (ii) ou (iii) est suivie de
(iv) une étape de mise en contact du substrat métallique avec une composition aqueuse de décapage sans phosphonate ayant une valeur de pH à 55 °C dans la plage allant de 5 à 9 et contenant au moins un copolymère, qui est soluble dans l'eau ou dispersible dans l'eau et choisi dans le groupe constitué par les polyvinylpyrrolidones ; la teneur en eau étant dans la plage allant de 95,0 % en poids à 99,9 % en poids par rapport au poids total de la composition, la polyvinylpyrrolidone étant un polymère aléatoire polymérisé à partir d'un mélange de vinylpyrrolidone et d'acétate de vinyle ou un polymère aléatoire polymérisé à partir d'un mélange de vinylpyrrolidone et d'acétate de vinyle et d'un monomère à monoinsaturation éthylénique supplémentaire, le rapport molaire de l'acétate de vinyle à la vinylpyrrolidone allant de 30:70 à 70:30, suivie de
(v) une étape de rinçage du substrat métallique avec une troisième composition de rinçage, ou
(vi) une étape de rinçage du substrat métallique avec une troisième composition de rinçage suivie d'une étape de rinçage du substrat métallique avec une quatrième composition de rinçage, ou
(vii) une étape de rinçage du substrat métallique avec une troisième composition de rinçage suivie d'une étape de rinçage du substrat métallique avec une quatrième composition de rinçage suivie d'une étape de rinçage du substrat métallique avec une cinquième composition de rinçage.

11. Procédé pour le décapage d'un substrat métallique selon la revendication 9 ou 10, dans lequel le substrat métallique est choisi dans le groupe constitué par l'acier, l'acier galvanisé et l'aluminium et ses alliages.

12. Procédé pour le revêtement d'un substrat métallique comprenant au moins
(a) le procédé pour le décapage d'un substrat métallique selon l'une quelconque des revendications 9 à 11, suivi de
(b) une étape de revêtement du substrat métallique ainsi décapé avec une composition de revêtement par conversion, ou
(c) l'étape (b) suivie d'une étape d'application d'une composition de revêtement par électrodéposition ; ou
(d) l'étape (b) suivie de l'étape (c) suivie d'une ou plusieurs étapes d'application d'une ou plusieurs compositions de revêtement supplémentaires.

13. Procédé pour le revêtement d'un substrat métallique selon la revendication 12, dans lequel la composition de revêtement par conversion utilisée à l'étape (b) est choisie dans le groupe constitué par
i. des compositions de revêtement par conversion de phosphate contenant des ions zinc et des ions manganèse et/ou des ions nickel,
ii. des compositions de revêtement par conversion à base d'organosilane contenant au moins un organosilane et/ou ses produits d'hydrolyse et/ou ses produits de condensation ; et
iii. des compositions de revêtement par conversion de passivation contenant au moins un composé choisi dans les groupes des composés de zirconium, des composés de titane et des composés de hafnium ; et
dans le cas de l'utilisation d'une composition de revêtement par conversion de phosphate, le substrat métallique décapé obtenu à l'étape (a) est mis en contact avec une composition d'activation comprenant des cristaux de phosphate de zinc et/ou des cristaux de phosphate de titane avant la mise en œuvre de l'étape (b) ; et
dans le cas de l'utilisation d'une composition de revêtement par conversion de phosphate, le substrat métallique revêtu par conversion obtenu à l'étape (b) est mis en contact avec une composition de passivation comprenant au moins un composé choisi dans les groupes des composés de zirconium, des composés de titane et des composés de hafnium.

14. Procédé pour le revêtement d'un substrat métallique selon la revendication 12 ou 13, dans lequel la composition de revêtement par électrodéposition utilisée à l'étape (c) est choisie dans le groupe constitué par les compositions de revêtement par électrodéposition anodique et cathodique ; et dans le cas de l'utilisation de compositions de revêtement par électrodéposition cathodique, les compositions de revêtement par électrodéposition cathodique sont choisies dans le groupe constitué par les compositions de revêtement par électrodéposition de type époxy et les compositions de revêtement par électrodéposition de type poly(méth)acrylate ; et à la suite de l'étape (c), le séchage et le durcissement du revêtement par électrodéposition.

15. Procédé pour le revêtement d'un substrat métallique selon l'une quelconque des revendications 12 à 14, dans lequel les compositions de revêtement supplémentaires utilisées à l'étape (d) sont choisies parmi les compositions de charge, les compositions de couche de base et les compositions de revêtement de couche transparente.
